(19) **Europäisches Patentamt / European Patent Office / Office européen des brevets**

(11) **EP 3 259 934 B1**

(12) **FASCICULE DE BREVET EUROPEEN**

(45) Date de publication et mention de la délivrance du brevet:
**02.01.2019 Bulletin 2019/01**

(21) Numéro de dépôt: **16713520.1**

(22) Date de dépôt: **19.02.2016**

(51) Int Cl.:
*H04W 24/02* *(2009.01)* *H04W 84/08* *(2009.01)*
*H04W 4/00* *(2018.01)*

(86) Numéro de dépôt international:
**PCT/FR2016/050395**

(87) Numéro de publication internationale:
**WO 2016/132088 (25.08.2016 Gazette 2016/34)**

(54) **COMMUNICATION SANS FIL ENTRE UN RESEAU D'ACCES ET UN TERMINAL A PORTEE D'UNE PLURALITE DE STATIONS DE BASE DE TYPE SEMI-DUPLEX DUDIT RESEAU D'ACCES**

DRAHTLOSE KOMMUNIKATION ZWISCHEN EINEM ZUGANGSNETZWERK UND EINEM ENDGERÄT IN REICHWEITE EINER VIELZAHL AN BASISSTATIONEN VOM HALBDUPLEXTYP DES BESAGTEN ZUGANGSNETZWERKS

WIRELESS COMMUNICATION BETWEEN AN ACCESS NETWORK AND A TERMINAL IN RANGE OF A PLURALITY OF BASE STATIONS OF HALF-DUPLEX TYPE OF SAID ACCESS NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.02.2015 FR 1551396**

(43) Date de publication de la demande:
**27.12.2017 Bulletin 2017/52**

(73) Titulaire: **SIGFOX**
**31670 Labège (FR)**

(72) Inventeur: **MOLINIER, Lionel**
**31230 Castanet-Tolosan (FR)**

(74) Mandataire: **Ipside**
**6, Impasse Michel Labrousse**
**31100 Toulouse (FR)**

(56) Documents cités:
**WO-A1-2015/172041    GB-A- 2 509 912**
**GB-A- 2 513 181    US-A1- 2002 022 487**
**US-A1- 2014 269 518**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### DOMAINE TECHNIQUE

La présente invention appartient au domaine des télécommunications numériques, et concerne plus particulièrement un procédé et un système de communication sans fil entre un réseau d'accès et des terminaux.

### ÉTAT DE LA TECHNIQUE

La présente invention trouve une application particulièrement avantageuse, bien que nullement limitative, dans les systèmes de communication sans fil à bande ultra étroite. Par « bande ultra étroite » (« Ultra Narrow Band » ou UNB dans la littérature anglo-saxonne), on entend que le spectre fréquentiel instantané des signaux radioélectriques émis par les terminaux est de largeur fréquentielle inférieure à un kilohertz.

De tels systèmes de communication sans fil UNB sont particulièrement adaptés pour des applications du type M2M (acronyme anglo-saxon pour « Machine-to-Machine ») ou du type « Internet des objets » (« Internet of Things » ou IoT dans la littérature anglo-saxonne).

Dans un tel système de communication sans fil UNB, les échanges de données sont essentiellement monodirectionnels, en l'occurrence sur un lien montant entre des terminaux et un réseau d'accès dudit système.

Les terminaux émettent des messages montants qui sont collectés par des stations de base du réseau d'accès, sans avoir à s'associer préalablement à une ou plusieurs stations de base du réseau d'accès. En d'autres termes, les messages montants émis par un terminal ne sont pas destinés à une station de base spécifique du réseau d'accès, et le terminal émet ses messages montants en supposant qu'ils pourront être reçus par au moins une station de base. De telles dispositions sont avantageuses en ce que le terminal n'a pas besoin de réaliser des mesures régulières, gourmandes notamment d'un point de vue consommation électrique, pour déterminer la station de base la plus appropriée pour recevoir ses messages montants. La complexité repose sur le réseau d'accès, qui doit être capable de recevoir des messages montants pouvant être émis à des instants arbitraires et sur des fréquences centrales arbitraires. Chaque station de base du réseau d'accès reçoit des messages montants des différents terminaux qui sont à sa portée.

Un tel mode de fonctionnement, dans lequel les échanges de données sont essentiellement monodirectionnels, est tout à fait satisfaisant pour de nombreuses applications, comme par exemple la télé-relève de compteurs de gaz, d'eau, d'électricité, la télésurveillance de bâtiments ou de maisons, etc.

Dans certaines applications cependant, il peut être avantageux de pouvoir également effectuer des échanges de données dans l'autre direction, à savoir sur un lien descendant du réseau d'accès vers les terminaux, par exemple pour reconfigurer un terminal et/ou commander un actionneur relié audit terminal. Toutefois, il est souhaitable d'offrir une telle capacité en limitant l'impact sur le coût de déploiement du réseau d'accès.

Le document US 2002/022487 A1 décrit une communication sans fil entre un réseau d'accès avec une pluralité de stations de base qui est adapté à émettre des messages descendants à destination d'une pluralité de terminaux, et à recevoir des messages montants émis par lesdits terminaux. Une des stations de base est sélectionnée selon leurs niveaux de charge, afin d'optimiser la probabilité de réception des messages.

A cet effet, il est envisagé d'utiliser des stations de base semi-duplex, c'est-à-dire des stations de base qui peuvent recevoir des messages montants et émettre des messages descendants, mais pas simultanément.

Le document WO 2015/172041 A1 (état de la technique selon l'article 54(3) CBE) décrit une telle station de base semi-duplex dont les transmissions sont organisées afin d'éviter des collisions entre les messages montants et descendants.

Toutefois, dans un tel cas, on comprend qu'une station de base qui passe dans un mode émission, pour émettre un message descendant à destination d'un terminal, n'est plus disponible pour recevoir des messages montants émis par d'autres terminaux, de sorte que de nombreux messages montants peuvent ainsi être manqués.

### EXPOSÉ DE L'INVENTION

La présente invention a pour objectif de remédier à tout ou partie des limitations des solutions de l'art antérieur, notamment celles exposées ci-avant, en proposant une solution qui permette d'avoir des échanges de données bidirectionnels tout en limitant le nombre de messages montants manqués par le réseau d'accès.

L'invention est définie par les revendications ci-jointes.

Des références dans la suite de la présente description à des modes de réalisation, des objets ou des aspects de l'invention, et/ou des exemples, qui ne soient pas couverts par les revendications, sont donc à considérer comme ne faisant pas partie de l'invention.

A cet effet, et selon un premier aspect, l'invention concerne un procédé de communication sans fil entre un réseau d'accès et une pluralité de terminaux, ledit réseau d'accès étant adapté à émettre des messages descendants à destination des terminaux et à recevoir des messages montants émis par lesdits terminaux, ledit réseau d'accès comportant une pluralité de stations de base configurées pour émettre des messages descendants dans des fenêtres d'émission au cours desquelles lesdites stations de base ne peuvent pas recevoir de messages montants. Lorsqu'un message descendant doit être émis, au cours d'un intervalle temporel prédéterminé, à destination d'un terminal ayant émis un message montant reçu par plusieurs stations de base, ledit procédé comporte des étapes de :

- obtention, par le réseau d'accès, de grandeurs, dites « charges en réception », associées respectivement à un groupe de stations de base ayant reçu le message montant émis par ledit terminal, chaque charge en réception étant représentative d'une probabilité de réception, par la station de base considérée, d'un message montant au cours dudit intervalle temporel,
- sélection, par le réseau d'accès, d'une station de base parmi les stations de base du groupe, en fonction des charges en réception associées auxdites stations de base du groupe pour ledit intervalle temporel,
- émission du message descendant par la station de base sélectionnée parmi les stations de base du groupe.

Ainsi, le procédé de communication vise à exploiter la redondance en réception offerte par le réseau d'accès, qui permet dans certains cas de recevoir un même message montant au moyen de plusieurs stations de base. Si un message descendant doit être émis à destination d'un terminal, alors chaque station de base ayant reçu un message montant de ce terminal peut être utilisée pour émettre ledit message descendant, puisqu'il peut être considéré que ledit terminal est à portée de chacune de ces stations de base.

L'invention repose alors sur l'utilisation de charges en réception représentatives, pour chaque station de base ayant reçu ledit message montant, de la probabilité de réception d'un message montant au cours de l'intervalle temporel au cours duquel le message descendant doit être émis. Grâce à l'utilisation de telles charges en réception, on comprend qu'il est possible de sélectionner, pour l'émission du message descendant, une station de base parmi celles présentant la plus faible probabilité de réception, de sorte que le risque de manquer un ou plusieurs messages montants est réduit.

Dans des modes particuliers de mise en oeuvre, le procédé de communication peut comporter en outre l'une ou plusieurs des caractéristiques suivantes, prises isolément ou selon toutes les combinaisons techniquement possibles.

Dans des modes particuliers de mise en oeuvre, les charges en réception utilisées pour sélectionner la station de base sont déterminées en fonction de messages montants préalablement reçus par les stations de base.

De telles dispositions permettent de s'auto-adapter à l'environnement de chaque station de base en tenant compte des différents messages montants reçus auparavant et de leur répartition dans le temps, ainsi que d'une éventuelle reproduction au cours du temps de schémas particuliers de réception de messages montants. En particulier, dans les systèmes de communication sans fil UNB, les terminaux sont souvent configurés pour émettre des messages montants de façon récurrente, sensiblement périodique. Par conséquent, des schémas particuliers de réception se reproduiront au cours du temps et pourront être pris en compte pour la sélection de la station de base à utiliser pour émettre le message descendant.

Dans des modes particuliers de mise en oeuvre, la charge en réception d'une station de base est représentative d'une probabilité de réception pondérée, pour chaque message montant susceptible d'être reçu par ladite station de base au cours dudit intervalle temporel, par la probabilité qu'a ce message montant d'être également reçu par une autre station de base du réseau d'accès.

De telles charges en réception, représentatives d'une probabilité de réception pondérée, sont particulièrement avantageuses dans la mesure où elles prennent en compte le fait qu'un message montant manqué par une station de base donnée n'est pas nécessairement manqué par le réseau d'accès, qui comporte d'autres stations de base. Ainsi, même si la station de base considérée est susceptible de recevoir de nombreux messages montants au cours de l'intervalle temporel considéré, elle peut néanmoins être utilisée pour émettre le message descendant si chaque message montant susceptible d'être reçu est également susceptible d'être reçu par d'autres stations de base.

Dans des modes particuliers de mise en oeuvre, le procédé de communication comporte une étape préalable d'établissement de calendriers de réception associés respectivement à différentes stations de base du réseau d'accès, chaque calendrier de réception comportant des charges en réception associées respectivement à différents intervalles temporels sur une fenêtre temporelle prédéfinie.

Ainsi, des calendriers en réception sont préalablement établis, et de préférence actualisés au cours du temps, de sorte que, lorsqu'un message descendant doit être émis, les charges en réception à utiliser sont disponibles immédiatement et n'ont pas à être calculées à chaque fois qu'un nouveau message descendant doit être émis. Pour une station de base pour laquelle un calendrier de réception a été préalablement établi, la charge en réception utilisée au cours de l'étape de sélection correspond à la charge en réception qui est associée, d'après le calendrier de réception de ladite station de base, à l'intervalle temporel au cours duquel ledit message descendant doit être émis.

Dans des modes particuliers de mise en oeuvre, les charges en réception d'un calendrier de réception, sur une fenêtre temporelle constituée d'un nombre $N_{IT}$ d'intervalles temporels $\delta T_i$, $1 \leq i \leq N_{IT}$, sont représentatives d'une probabilité de réception pondérée, la charge en réception associée à l'intervalle temporel $\delta T_i$ pour une station de base de rang n du groupe comportant $N_S$ stations de base, $1 \leq n \leq N_S$, étant établie à partir d'une grandeur $W_n^{\delta T_i}$ calculée selon l'expression :

$$W_n^{\delta Ti} = \frac{\sum_{m=1}^{Ni} \dfrac{1}{BS_m}}{M}$$

expression dans laquelle :

- M correspond au nombre de messages montants reçus sur une fenêtre temporelle précédente,
- Ni correspond au nombre de messages montants reçus sur l'intervalle temporel $\delta Ti$ de la fenêtre temporelle précédente,
- $BS_m$ correspond au nombre de stations de base ayant reçu, au cours de l'intervalle temporel $\delta Ti$ de la fenêtre temporelle précédente, le message montant de rang m, $1 \leq m \leq Ni$.

Dans des modes particuliers de mise en oeuvre, l'étape de sélection comporte, pour chaque station de base du groupe, le calcul de la valeur d'une fonction de sélection prédéfinie qui dépend de la charge en réception, la station de base sélectionnée étant celle qui optimise la valeur de ladite fonction de sélection sur le groupe de stations de base, ladite fonction de sélection variant avec ladite charge en réception de telle sorte que la valeur de la fonction de sélection tend à être optimisée lorsque la probabilité de réception d'un message montant au cours de l'intervalle temporel diminue.

Dans des modes particuliers de mise en oeuvre, la fonction de sélection dépend en outre d'un paramètre représentatif de la superficie d'une zone de couverture de la station de base considérée, et varie avec ledit paramètre de telle sorte que la valeur de la fonction de sélection tend à être optimisée lorsque ladite superficie de la zone de couverture diminue.

Dans des modes particuliers de mise en oeuvre, la fonction de sélection dépend en outre d'un paramètre représentatif du nombre de terminaux couverts uniquement par la station de base considérée, et varie avec ledit paramètre de telle sorte que la valeur de la fonction de sélection tend à être optimisée lorsque ledit nombre de terminaux diminue.

Dans des modes particuliers de mise en oeuvre, la fonction de sélection dépend en outre d'un paramètre représentatif de la qualité d'un canal entre le terminal et la station de base considérée, et varie avec ledit paramètre de telle sorte que la valeur de la fonction de sélection tend à être optimisée lorsque ladite qualité de canal augmente.

Dans des modes particuliers de mise en oeuvre, la fonction de sélection dépend en outre d'un paramètre représentatif de la qualité d'une liaison entre la station de base considérée et un serveur du réseau d'accès, et varie avec ledit paramètre de telle sorte que la valeur de la fonction de sélection tend à être optimisée lorsque ladite qualité de liaison augmente.

Dans des modes particuliers de mise en oeuvre, la fonction de sélection dépend en outre d'un paramètre représentatif du nombre de messages descendants émis par la station de base considérée depuis une durée d'analyse prédéfinie, et varie avec ledit paramètre de telle sorte que la valeur de la fonction de sélection tend à être optimisée lorsque ledit nombre de messages descendants diminue.

Selon un second aspect, la présente invention concerne un réseau d'accès comportant une pluralité de stations de base adaptées à émettre des messages descendants à destination de terminaux, et des moyens configurés pour mettre en oeuvre un procédé de communication selon l'un quelconque des modes de mise en oeuvre de l'invention.

Selon un troisième aspect, la présente invention concerne un système de communication sans fil comportant un réseau d'accès selon l'un quelconque des modes de réalisation de l'invention, et une pluralité de terminaux.

## PRÉSENTATION DES FIGURES

L'invention sera mieux comprise à la lecture de la description suivante, donnée à titre d'exemple nullement limitatif, et faite en se référant aux figures qui représentent :

- Figure 1 : une représentation schématique d'un système de communication sans fil,
- Figure 2 : un diagramme illustrant les principales étapes d'un procédé de communication sans fil,
- Figure 3 : un diagramme illustrant un mode préféré de mise en oeuvre d'un procédé de communication sans fil.

Dans ces figures, des références identiques d'une figure à une autre désignent des éléments identiques ou analogues. Pour des raisons de clarté, les éléments représentés ne sont pas à l'échelle, sauf mention contraire.

## DESCRIPTION DÉTAILLÉE DE MODES DE RÉALISATION

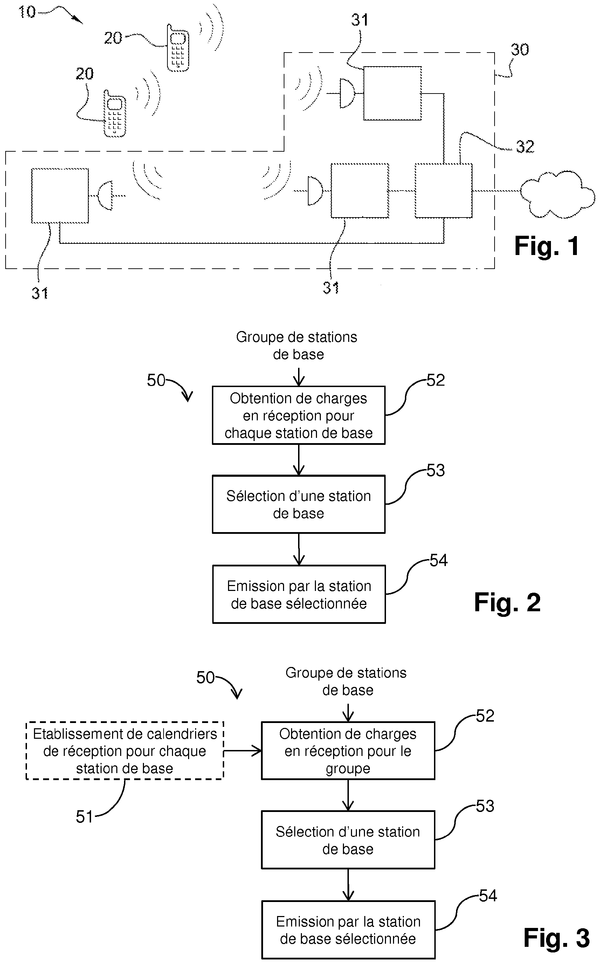

La figure 1 représente schématiquement un système 10 de communication sans fil, par exemple de type UNB, comportant plusieurs terminaux 20 et un réseau d'accès 30 comportant plusieurs stations de base 31.

Les terminaux 20 et les stations de base 31 du réseau d'accès 30 échangent des données sous la forme de signaux radioélectriques. Par « signal radioélectrique », on entend une onde électromagnétique se propageant via des moyens non filaires, dont les fréquences sont comprises dans le spectre traditionnel des ondes radioélectriques (quelques hertz à plusieurs centaines de gigahertz).

Les terminaux 20 sont adaptés à émettre des messages montants sur un lien montant à destination du réseau d'accès 30. Les messages montants sont par exemple émis de façon asynchrone. Par « émettre de façon asynchrone », on entend que les terminaux 20 déterminent de manière autonome quand ils émettent, sans coordination desdits terminaux 20 entre eux et avec les stations de base 31 du réseau d'accès 30.

Chaque station de base 31 est adaptée à recevoir les messages montants des terminaux 20 qui se trouvent à sa portée. Chaque message montant ainsi reçu est par exemple transmis à un serveur 32 du réseau d'accès 30, éventuellement accompagné d'autres informations comme un identifiant de la station de base 31 qui l'a reçu, la puissance mesurée dudit message montant reçu, la date de réception dudit message montant, etc. Le serveur 32 traite par exemple l'ensemble des messages montants reçus des différentes stations de base 31.

En outre, le réseau d'accès 30 est également adapté à émettre, par l'intermédiaire des stations de base 31, des messages descendants sur un lien descendant à destination des terminaux 20, lesquels sont adaptés à les recevoir. Les messages descendants sont par exemple émis à l'initiative du réseau d'accès 30. Dans un tel cas, les terminaux 20 doivent en permanence écouter le lien descendant, dans l'attente d'un éventuel message descendant. Le réseau d'accès 30 peut également émettre un message descendant en réponse à chaque message montant reçu, ou bien n'émettre des messages descendants qu'en réponse à certains messages montants. Par exemple, le réseau d'accès 30 peut ne répondre qu'après avoir reçu un nombre prédéfini de messages montants d'un même terminal 20, ou ne répondre qu'à des messages montants comportant une requête à cet effet, etc.

Dans la suite de la suite de la description, on se place de manière non limitative dans le cas où le réseau d'accès 30 émet des messages descendants en réponse à tout ou partie des messages montants émis par des terminaux 20.

Pour réduire le coût de déploiement du réseau d'accès 30, les stations de base 31 sont du type semi-duplex. En d'autres termes, ces stations de base 31 peuvent recevoir des messages montants et émettre des messages descendants, mais pas simultanément. Ainsi, chaque station de base 31 peut être alternativement placée dans :

- un mode réception, dans lequel ladite station de base 31 peut recevoir des messages montants sur une fenêtre de réception mais ne peut pas émettre de messages descendants,
- un mode émission, dans lequel ladite station de base 31 peut émettre des messages descendants sur une fenêtre d'émission mais ne peut pas recevoir de messages montants.

Dans la suite de la description, on se place de manière non limitative dans le cas où chaque terminal 20 est du type synchrone en réception. En d'autres termes, chaque terminal 20 ne peut recevoir un message descendant qu'au cours d'une fenêtre d'écoute prédéterminée par rapport au dernier message montant émis par ledit terminal 20.

Du fait qu'ils n'ont pas à émettre et à recevoir simultanément, de tels terminaux 20 sont, dans des modes préférés de réalisation, du type semi-duplex, afin d'en réduire les coûts de fabrication.

La fenêtre d'écoute d'un terminal 20 peut débuter immédiatement après avoir émis un message montant, en particulier si les temps de réponse du réseau d'accès 30 sont courts. Toutefois, dans des modes préférés de réalisation, chaque terminal 20, après avoir émis un message montant, est configuré pour passer dans un mode veille sur une fenêtre de veille de durée prédéterminée connue également du réseau d'accès 30. De manière conventionnelle, le mode veille est un mode de fonctionnement optimisé pour réduire la consommation électrique, dans lequel ledit terminal 20 ne peut notamment ni recevoir des messages descendants, ni émettre des messages montants. Par exemple, la durée de la fenêtre de veille est choisie égale ou supérieure au temps de réponse minimal du réseau d'accès 30.

Dans la suite de la description, on se place de manière non limitative dans le cas où chaque terminal 20 est configuré pour passer en mode veille après avoir émis un message montant.

Après la fenêtre de veille, le terminal 20 quitte le mode veille pour écouter le lien descendant dans l'attente d'un message descendant, sur une fenêtre d'écoute de durée prédéterminée égale ou supérieure à la durée du message descendant qui doit être reçu du réseau d'accès.

Il est à noter que, si un terminal 20 sait a priori qu'aucun message descendant ne sera émis par le réseau d'accès 30 (par exemple du fait que le message montant qu'il a émis ne comportait pas de requête à cet effet), alors ledit terminal 20 n'écoute pas le lien descendant, et reste de préférence en mode veille, par exemple jusqu'à l'émission du prochain message montant.

La figure 2 représente schématiquement les principales étapes d'un procédé 50 de communication, qui repose sur le fait que, le plus souvent, chaque message montant émis par un terminal 20 est reçu par plusieurs stations de base 31 du réseau d'accès 30. Dans un tel cas, ledit terminal 20 ayant émis ce message montant est considéré comme étant à portée de ces stations de base 31, et chacune de ces stations de base peut être utilisée pour émettre un message descendant à destination dudit terminal 20.

Tel qu'illustré par la figure 2, lorsqu'un message descendant doit être émis, au cours d'un intervalle temporel prédéterminé, à destination d'un terminal 20 ayant émis un message montant reçu par plusieurs stations de base 31, ledit procédé 50 comporte

- une étape 52 d'obtention de grandeurs, dites « charges en réception », associées respectivement à un groupe de stations de base 31 ayant reçu le message montant émis par ledit terminal 20, chaque charge en réception étant représentative d'une probabilité de réception, par la station de base considérée, d'un message montant au cours dudit intervalle temporel,

- une étape 53 de sélection d'une station de base 31 parmi les stations de base du groupe, en fonction des charges en réception associées auxdites stations de base du groupe pour ledit intervalle temporel,
- une étape 54 d'émission du message descendant par la station de base 31 sélectionnée parmi les stations de base du groupe.

Le procédé 50 de communication est mis en oeuvre par le réseau d'accès 30 qui comporte des moyens configurés pour mettre en oeuvre les différentes étapes dudit procédé 50.

En particulier, les stations de base 31 et le serveur 32 comportent des modules de traitement respectifs (non représentés sur les figures). Chaque module de traitement comporte par exemple un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en oeuvre les différentes étapes du procédé 50 de communication. Dans une variante, chaque module de traitement comporte un ou des circuits logiques programmables, de type FPGA, PLD, etc., et/ou circuits intégrés spécialisés (ASIC) adaptés à mettre en oeuvre tout ou partie desdites étapes du procédé 50 de communication.

Chaque station de base 31 comporte en outre des moyens de communication sans fil, considérés comme connus de l'homme de l'art, permettant à ladite station de base de recevoir des messages montants et d'émettre des messages descendants. Les stations de base 31 et le serveur 32 comportent également des moyens de communication de réseau respectifs, considérés comme connus de l'homme de l'art, permettant au serveur 32 d'échanger des données avec chaque station de base 31.

En d'autres termes, le réseau d'accès 30 comporte un ensemble de moyens configurés de façon logicielle (produit programme d'ordinateur spécifique) et/ou matérielle (FPGA, PLD, ASIC, etc.) pour mettre en oeuvre les différentes étapes du procédé 50 de communication.

Dans la suite de la description, on se place de manière non limitative dans le cas où l'étape 52 d'obtention et l'étape 53 de sélection sont exécutées par le serveur 32 du réseau d'accès 30, l'étape 54 d'émission étant exécutée par la station de base 31 sélectionnée. D'autres répartitions des différentes opérations à effectuer peuvent cependant être envisagées.

On décrit à présent de manière plus détaillée des exemples non limitatifs de mise en oeuvre des étapes 52 d'obtention et 53 de sélection du procédé 50 de communication.

### A) Obtention de charges en réception

Tel qu'indiqué précédemment, le procédé 50 de communication comporte tout d'abord une étape 52 d'obtention de charges en réception associées respectivement à un groupe de stations de base 31 ayant reçu le message montant émis par ledit terminal 20.

Le groupe comporte de préférence toutes les stations de base 31 ayant reçu ledit message montant, mais peut comporter, dans certains cas, uniquement un sous-ensemble de celles-ci. Par exemple, il est possible de ne considérer qu'un sous-ensemble des stations de base 31 ayant reçu ledit message montant si une de ces stations de base, au moins, est configurée pour répondre uniquement à certains terminaux 20, ou est momentanément indisponible pour émettre des messages descendants, etc.

Pour chaque station de base 31 du groupe considéré, la charge en réception obtenue est représentative d'une probabilité de réception, par la station de base 31 considérée, d'un message montant au cours de l'intervalle temporel au cours duquel le message descendant doit être émis. Dans le cas considéré ici, à titre d'exemple non limitatif, où le message descendant doit être émis au cours de la fenêtre d'écoute du terminal 20, l'intervalle temporel considéré correspond sensiblement à ladite fenêtre d'écoute dudit terminal 20.

On comprend que, en considérant de telles charges en réception, il est possible de sélectionner, pour l'émission du message descendant, une station de base 31 présentant une faible probabilité de réception pour l'intervalle de temps considéré, de telle sorte que le risque de manquer un ou plusieurs messages montants peut être grandement réduit.

Les charges en réception sont par exemple déterminées par le serveur 32, en fonction d'une connaissance a priori sur les instants d'émission de messages montants des différents terminaux 20, et des différentes stations de base 31 susceptibles de recevoir ces messages montants.

De préférence, les charges en réception sont déterminées en fonction de messages montants préalablement reçus par les différentes stations de base 31. En effet, si les terminaux 20 sont configurés pour émettre des messages montants de façon récurrente, sensiblement périodique, alors des schémas particuliers de réception se reproduiront au cours du temps. Lesdits messages montants préalablement reçus par les différentes stations de base 31 permettent alors d'avoir une connaissance a priori des instants d'émission de messages montants des différents terminaux 20, et des différentes stations de base 31 susceptibles de recevoir ces messages montants.

Les charges en réception utilisées peuvent être déterminées à chaque fois qu'un message descendant doit être émis, ou peuvent être déterminées avant de savoir qu'un message descendant doit être émis.

La figure 3 représente schématiquement un mode préféré de mise en oeuvre, dans lequel le procédé 50 de communication comporte en outre une étape 51 préalable d'établissement desdites charges en réception pour chaque station de base 31 du réseau d'accès 30, en fonction de messages montants préalablement reçus par les différentes stations de base 31.

Par exemple, au cours de l'étape 51 d'établissement, on détermine des calendriers de réception associés respectivement à différentes stations de base 31, chaque calendrier de réception comportant les charges en réception associées respectivement à différents intervalles temporels sur une fenêtre temporelle prédéfinie. Les calendriers de réception sont de préférence établis pour chaque station de base 31 du réseau d'accès 30, par exemple par le serveur 32, en fonction des messages montants reçus par les différentes stations de base 31 et transmis par celles-ci audit serveur 32. Toutefois, dans certains cas, lesdits calendriers de réception peuvent être établis par les stations de base 31, et transmis au serveur 32.

La fenêtre temporelle est par exemple constituée d'un nombre $N_{IT}$ d'intervalles temporels $\delta Ti$, $1 \leq i \leq N_{IT}$. Afin de limiter les calculs nécessaires pour établir les calendriers de réception, on considère de préférence des intervalles temporels $\delta Ti$ de durée supérieure à celle des fenêtres d'écoute des terminaux 20, afin de limiter la résolution temporelle avec laquelle des charges en réception doivent être calculées. Par exemple, la fenêtre temporelle sur laquelle sont déterminés les calendriers de réception correspond à une durée de 24 heures, et chaque intervalle temporel $\delta Ti$ correspond à une durée de 1 heure à l'intérieur de ladite fenêtre temporelle. Le nombre $N_{IT}$ d'intervalles temporels $\delta Ti$ est par exemple égal à 24 dans le cas d'intervalles temporels sans recouvrement temporel, mais peut également être supérieur à 24 afin d'avoir des intervalles temporels présentant un recouvrement temporel non nul, pour éviter le cas où la fenêtre d'écoute d'un terminal 20 serait à cheval sur deux intervalles temporels consécutifs.

Dans la suite de la description, on se place de manière non limitative dans le cas d'une fenêtre temporelle de 24 heures comportant 24 ($N_{IT} = 24$) intervalles temporels $\delta Ti$ de 1 heure. Par exemple, l'intervalle temporel $\delta Ti$ est compris entre (i-1) heure(s) et i heure(s), $1 \leq i \leq N_{IT}$.

Ainsi, le réseau d'accès 30 peut établir un calendrier de réception pour chaque station de base 31, et peut l'actualiser toutes les 24 heures en fonction des messages montants reçus au cours des dernières 24 heures. Par exemple, les charges en réception d'une fenêtre temporelle $\Delta T_j$ sont déterminées en fonction des messages montants reçus au cours d'une fenêtre temporelle $\Delta T_{j-1}$ précédente.

L'étape 52 d'obtention consiste alors, pour les stations de base 31 du groupe pour lesquelles des calendriers de réception ont été préalablement établis, à récupérer dans lesdits calendriers de réception de la fenêtre temporelle $\Delta T_j$ les charges en réception associées à l'intervalle de temps $\delta Ti$ correspondant à la fenêtre d'écoute du terminal 20 auquel le message descendant doit être émis.

Tel qu'indiqué précédemment, chaque charge en réception est représentative, pour chaque station de base 31 considérée, de la probabilité de réception d'un message montant au cours de l'intervalle de temps considéré. Différentes expressions des charges en réception peuvent être envisagées, dès lors qu'elles sont effectivement représentatives de la probabilité de réception d'un message montant au cours de l'intervalle de temps considéré.

Suivant un premier exemple non limitatif, la charge en réception associée à l'intervalle temporel $\delta Ti$ de la fenêtre temporelle $\Delta T_j$, pour une station de base 31 de rang n parmi les stations de base du réseau d'accès 30, est établie à partir d'une grandeur $W_n^{\delta Ti}$ calculée selon l'expression :

$$W_n^{\delta Ti} = \frac{Ni}{M}$$

expression dans laquelle :

- M correspond au nombre de messages montants reçus par la station de base 31 de rang n sur la fenêtre temporelle $\Delta T_{j-1}$ précédente,
- Ni correspond au nombre de messages montants reçus par la station de base 31 de rang n sur l'intervalle temporel $\delta Ti$ de la fenêtre temporelle $\Delta T_{j-1}$ précédente (tels que la somme des Ni, $1 \leq i \leq N_{IT}$, est égale à M).

Une telle grandeur $W_n^{\delta Ti}$ correspond effectivement, d'après les messages montants reçus au cours des dernières 24 heures, à la probabilité de réception d'un message montant au cours de l'intervalle temporel $\delta Ti$ par la station de base 31 de rang n. En outre, de telles grandeurs $W_n^{\delta Ti}$ peuvent être établies directement par chaque station de base 31.

Suivant un autre exemple, la grandeur $W_n^{\delta Ti}$ est de préférence calculée selon l'expression :

$$W_n^{\delta Ti} = \frac{\sum_{m=1}^{Ni} \frac{1}{BS_m}}{M}$$

expression dans laquelle $BS_m$ correspond au nombre de stations de base 31 ayant reçu, au cours de l'intervalle temporel $\delta Ti$ de la fenêtre temporelle $\Delta T_{j-1}$ précédente, le message montant de rang m parmi les Ni messages montants reçus par la station de base 31 de rang n, $1 \leq$

m ≤ Ni.

Une telle grandeur $W_n^{\delta Ti}$ est particulièrement avantageuse en ce qu'elle est représentative d'une probabilité de réception pondérée, qui prend en compte, pour chaque message montant susceptible d'être reçu par la station de base 31 considérée au cours de l'intervalle temporel $\delta Ti$, de la probabilité qu'a ce message montant d'être également reçu par une autre station de base 31 du réseau d'accès 30. En d'autres termes, une telle probabilité de réception pondérée est représentative d'une probabilité de perte d'un message montant en cas d'émission par la station de base 31 considérée au cours de l'intervalle temporel $\delta Ti$ de la fenêtre temporelle $\Delta T_j$.

Il est à noter qu'une telle grandeur $W_n^{\delta Ti}$ représentative de la probabilité de réception pondérée ne conduit toutefois pas, sur la fenêtre temporelle $\Delta T_j$, à avoir une probabilité au sens mathématique du terme, dont la somme sur l'ensemble des réalisations possibles est égale à 1. De manière générale, on entend par « probabilité de réception » une fonction dont la valeur augmente avec le nombre de messages montants susceptibles d'être reçus.

Les charges en réception des calendriers de réception sur la fenêtre temporelle $\Delta T_j$ sont par exemple égales aux grandeurs $W_n^{\delta Ti}$ calculées à partir des messages montants reçus au cours de la fenêtre temporelle $\Delta T_{j-1}$ précédente. De préférence, de telles grandeurs $W_n^{\delta Ti}$ sont calculées pour plusieurs fenêtres temporelles précédentes $\Delta T_{j-1}$, $\Delta T_{j-2}$, $\Delta T_{j-3}$, etc., et sont combinées, par exemple par une moyenne pondérée, pour obtenir les charges en réception du calendrier de réception sur la fenêtre temporelle $\Delta T_j$, à utiliser au cours de l'étape 52 d'obtention.

B) Sélection d'une station de base

Au cours de l'étape 53, le serveur 32 sélectionne, en fonction des charges en réception obtenues pour les différentes stations de base 31 du groupe et pour l'intervalle temporel considéré, la station de base 31 qui sera utilisée pour émettre le message descendant à destination du terminal 20.

Par exemple, le serveur 32 peut sélectionner la station de base 31 dont la charge en réception correspond à la probabilité de réception la plus faible, de sorte que le nombre de messages montants susceptibles d'être manqués est grandement réduit.

Il est également possible, dans des modes particuliers de mise en oeuvre, de calculer pour chaque station de base 31 du groupe, la valeur d'une fonction de sélection F prédéfinie qui dépend de la charge en réception. La fonction de sélection F varie avec ladite charge en réception de telle sorte que la valeur de la fonction de sélection F tend à être optimisée lorsque la probabilité de réception d'un message montant diminue, et la station de base 31 sélectionnée est de préférence celle qui optimise la valeur de ladite fonction de sélection F sur le groupe de stations de base.

Dans la suite de la description, on se place de manière nullement limitative dans le cas où l'optimisation de la valeur de la fonction de sélection F consiste à maximiser ladite valeur pour les stations de base 31 du groupe sur l'intervalle temporel considéré. Rien n'exclut cependant, suivant d'autres exemples, de considérer une fonction de sélection F telle que l'optimisation de la valeur de ladite fonction de sélection consiste à minimiser ladite valeur.

Par exemple, la valeur de la fonction de sélection F est calculée selon l'expression suivante :

$$\frac{1}{1+p_R[n]}$$

expression dans laquelle $p_R[n]$ correspond à la charge en réception de la station de base 31 de rang n considérée pour l'intervalle temporel au cours duquel le message descendant doit être émis. Par exemple, la charge en réception $p_R[n]$ correspond à la grandeur $W_n^{\delta Ti}$ calculée selon l'une quelconque des expressions précédentes.

L'utilisation d'une fonction de sélection F est particulièrement avantageuse lorsque d'autres paramètres, autres que la seule charge en réception, doivent être pris en compte pour sélectionner la station de base 31 pour émettre le message descendant. Le cas échéant, la fonction de sélection F comporte par exemple au moins deux composantes, dont une composante, dite « composante de charge en réception » $f_{CR}$, calculée en fonction de la charge en réception, par exemple selon l'expression suivante :

$$f_{CR}[n] = \frac{1}{1+p_R[n]}$$

Dans des modes particuliers de mise en oeuvre, la fonction de sélection F comporte au moins une composante, en plus de la composante de charge en réception $f_{CR}$, parmi les composantes décrites ci-après.

Suivant un premier exemple, la fonction de sélection F comporte une composante, dite « composante de couverture » $f_{COV}$, qui dépend d'un paramètre représentatif de la superficie d'une zone de couverture de la station de base 31 considérée, et varie avec ledit paramètre de telle sorte que la valeur de la fonction de sélection F augmente lorsque ladite superficie de la zone de couverture diminue.

Grâce à une telle composante de couverture $f_{COV}$, il est possible de privilégier, pour l'émission du message descendant, des stations de base 31 présentant une zone de couverture de faible superficie. En effet, une station de base 31 dont la superficie de la zone de couverture est faible dessert en principe moins de terminaux 20 qu'une station de base 31 dont la superficie de la zone de couverture est importante. En outre, la probabilité qu'un terminal 20 mobile se retrouve dans une zone de couverture donnée diminue avec la superficie de celle-ci.

Par exemple, la valeur de la composante de couverture $f_{COV}$, pour une station de base 31 de rang n, est calculée selon l'expression :

$$f_{COV}[n] = \frac{\sum_{m=1}^{N_S} COV[m]}{COV[n]}$$

expression dans laquelle :

- $N_S$ correspond au nombre de stations de base 31 du groupe, $1 \le n \le N_S$,
- COV[i] correspond à la superficie de la zone de couverture de la station de base 31 de rang i, $1 \le i \le N_S$.

Suivant un autre exemple, la fonction de sélection F comporte une composante, dite « composante d'isolement » $f_{ISO}$, qui dépend d'un paramètre représentatif du nombre de terminaux 20 couverts uniquement par la station de base 31 considérée, et varie avec ledit paramètre de telle sorte que la valeur de la fonction de sélection F augmente lorsque ledit nombre de terminaux diminue.

Grâce à une telle composante d'isolement $f_{ISO}$, il est possible de privilégier, pour l'émission du message descendant, les stations de base 31 desservant des terminaux 20 dont les messages montants sont également reçus par d'autres stations de base.

Par exemple, la valeur de la composante d'isolement $f_{ISO}$, pour une station de base 31 de rang n, est calculée selon l'expression :

$$f_{ISO}[n] = \frac{1 + d_{SINGLE}[n]}{1 + \sum_{m=1}^{N_S} d_{SINGLE}[m]}$$

expression dans laquelle $d_{SINGLE}[i]$ correspond au nombre de terminaux 20 couverts uniquement par la station de base de rang i, $1 \le i \le N_S$.

Suivant un autre exemple, la fonction de sélection F comporte une composante, dite « composante de qualité canal » $f_{QC}$, qui dépend d'un paramètre représentatif de la qualité d'un canal entre le terminal 20 et la station de base 31 considérée, et varie avec ledit paramètre de telle sorte que la valeur de la fonction de sélection F augmente lorsque ladite qualité de canal augmente.

Grâce à une telle composante de qualité canal $f_{QC}$, il est possible de privilégier, pour l'émission du message descendant, les stations de base 31 pour lesquelles la qualité de canal avec le terminal 20 est suffisamment bonne pour assurer que le message descendant pourra être effectivement reçu et décodé par ledit terminal 20.

Par exemple, la valeur de la composante de qualité canal $f_{QC}$, pour une station de base de rang n, est calculée selon l'expression :

$$f_{QC}[n] = \frac{Q_C[n]}{\sum_{m=1}^{N_S} Q_C[m]}$$

expression dans laquelle $Q_C[i]$ correspond à la valeur de la qualité de canal entre le terminal 20 et la station de base 31 de rang i, $1 \le i \le N_S$. Par exemple, la valeur de la qualité de canal entre le terminal 20 et une station de base 31 peut être estimée à partir de la puissance mesurée d'un message montant émis par ledit terminal 20 et reçu par la station de base 31 considérée.

Suivant un autre exemple, la fonction de sélection F comporte une composante, dite « composante de qualité réseau » $f_{QR}$, qui dépend d'un paramètre représentatif de la qualité d'une liaison entre la station de base 31 considérée et le serveur 32 du réseau d'accès 30, et varie avec ledit paramètre de telle sorte que la valeur de la fonction de sélection F augmente lorsque ladite qualité de liaison augmente.

Grâce à une telle composante de qualité réseau $f_{QR}$, il est possible de privilégier, pour l'émission du message descendant, les stations de base 31 pour lesquelles la qualité de liaison avec le serveur 32 est suffisamment bonne pour assurer que le message descendant, préalablement transmis du serveur 32 à la station de base 31 sélectionnée, pourra être effectivement reçu par ladite station de base 31, et ensuite émis à destination du terminal 20.

Par exemple, la valeur de la composante de qualité réseau $f_{QR}$, pour une station de base 31 de rang n, est calculée selon l'expression :

$$f_{QR}[n] = \frac{Q_L[n]}{\sum_{m=1}^{N_S} Q_L[m]}$$

expression dans laquelle $Q_L[i]$ correspond à la valeur de la qualité de liaison entre le serveur 32 et la station de base 31 de rang i, $1 \le i \le N_S$. Par exemple, la valeur de la qualité de liaison entre le serveur 32 et une station de base 31 peut être estimée à partir d'une mesure d'un temps de parcours entre ledit serveur 32 et ladite station de base 31 (« Round Trip Time » ou RTT dans la littérature anglo-saxonne).

Suivant un autre exemple, la fonction de sélection F comporte une composante, dite « composante d'activité en émission » $f_{AE}$, qui dépend d'un paramètre représentatif du nombre de messages descendants émis par la station de base 31 considérée depuis une durée d'analyse prédéfinie, et varie avec ledit paramètre de telle sorte que la valeur de la fonction de sélection F augmente lorsque ledit nombre de messages descendants diminue.

De telles dispositions permettent d'éviter de sélectionner trop souvent la même station de base 31 pour émettre des messages descendants.

Par exemple, la valeur de la composante d'activité en émission $f_{AE}$, pour une station de base 31 de rang n, est calculée selon l'expression :

$$f_{AE}[n] = \frac{\sum_{m=1}^{N_S} \log(k[m])}{\log(k[n])}$$

expression dans laquelle :

- log(x) correspond à la fonction logarithme du nombre x,
- k[i] correspond au nombre de messages descendants émis depuis la durée d'analyse par la station de base 31 de rang i, $1 \leq i \leq N_S$.

Par exemple, la durée d'analyse est égale à la durée de la fenêtre temporelle, considérée ici égale à 24 heures, de sorte que le nombre k[i] correspond au nombre de messages descendants émis au cours de la fenêtre temporelle $\Delta T_{j-1}$ par la station de base 31 de rang i, $1 \leq i \leq N_S$.

Tel qu'indiqué précédemment, la fonction de sélection F comporte au moins la composante de charge en réception $f_{CR}$, et peut comporter, dans des modes particuliers de mise en oeuvre, au moins une composante additionnelle parmi les composantes suivantes :

- composante de couverture $f_{COV}$,
- composante d'isolement $f_{ISO}$,
- composante de qualité canal $f_{QC}$,
- composante de qualité réseau $f_{QR}$,
- composante d'activité en émission $f_{AE}$.

Lorsque la fonction de sélection F comporte plusieurs composantes, celles-ci sont combinées, par exemple additionnées et/ou multipliées entre elles, éventuellement pondérées par des coefficients de pondération respectifs.

Dans des modes préférés de mise en oeuvre, la fonction de sélection F comporte toutes les composantes décrites précédemment, par exemple combinées selon l'expression suivante :

$$F = a \cdot f_{CR} \cdot f_{COV} \cdot f_{ISO} + b \cdot f_{QL} \cdot f_{QR} + c \cdot f_{AE}$$

expression dans laquelle a, b et c correspondent à des coefficients de pondération qui permettent d'ajuster l'importance, dans la sélection de la station de base 31, des différentes composantes considérées.

Une fois calculée la valeur de la fonction de sélection F pour chaque station de base 31 du groupe, il est possible de sélectionner, pour l'émission du message descendant, la station de base 31 qui a permis d'obtenir la plus grande valeur de ladite fonction de sélection F. Une fois une station de base 31 sélectionnée par le serveur 32, ledit serveur 32 transmet le message descendant à la station de base 31 sélectionnée, qui l'émet sur le lien descendant à destination du terminal 20 au cours de l'étape 54.

De manière plus générale, il est à noter que les modes de mise en oeuvre et de réalisation considérés ci-dessus ont été décrits à titre d'exemples non limitatifs, et que d'autres variantes sont par conséquent envisageables.

Notamment, l'invention a été décrite en considérant qu'une seule station de base 31 est sélectionnée et utilisée pour émettre un message descendant à destination d'un terminal 20. Rien n'exclut cependant, suivant d'autres exemples, de sélectionner deux stations de base 31 ou plus pour émettre ledit message descendant, afin par exemple de bénéficier d'une certaine diversité spatiale en émission, et ainsi améliorer le rapport signal sur bruit du message descendant reçu par ledit terminal 20.

En outre, l'invention a été décrite en considérant un message descendant émis en réponse à un message montant. Rien n'exclut cependant, suivant d'autres exemples, d'émettre un message descendant au cours d'un intervalle temporel arbitraire, non déterminé par une fenêtre d'écoute d'un terminal 20. Le cas échéant, le terminal 20 doit être en mesure de recevoir un message descendant à tout instant.

En outre, l'invention a été décrite en considérant des intervalles temporels de durée supérieure à la durée des fenêtres d'écoute des terminaux 20. Rien n'exclut cependant, suivant d'autres exemples, de considérer des intervalles temporels de durée inférieure à la durée des fenêtres d'écoute des terminaux 20. Le cas échéant, plusieurs charges en réception peuvent être obtenues pour une même fenêtre d'écoute d'un terminal 20, associées respectivement à différents intervalles temporels à l'intérieur de ladite fenêtre d'écoute. Il est alors possible de sélectionner le couple station de base / intervalle temporel permettant de minimiser le risque de manquer des messages montants, par exemple en sélectionnant le couple station de base / intervalle temporel permettant d'optimiser la valeur de la fonction de sélection F sur les différentes stations de base 31 du groupe et sur les différents intervalles temporels à l'intérieur de la fenêtre d'écoute du terminal 20.

En outre, il est à noter que l'invention a été décrite en considérant que le procédé 50 de communication est exécuté dès lors que plusieurs stations de base 31 peuvent être utilisées pour émettre un message descendant à destination d'un terminal 20. Rien n'exclut cependant, suivant d'autres exemples, de conditionner l'exécution du procédé 50 de communication à la réalisation de certaines conditions. Par exemple, si un message descendant doit être émis à destination d'un terminal 20 à portée d'une station de base 31 pour laquelle une fenêtre d'émission a préalablement été configurée pour un autre message descendant, et que cette fenêtre d'émission se trouve dans la fenêtre d'écoute dudit terminal 20 considéré, alors le message descendant à destination dudit terminal 20 considéré est de préférence regroupé avec l'autre message descendant et émis par cette station de base 31, au cours de la même fenêtre d'émission, sans avoir à exécuter les différentes étapes du procédé 50 de communication.

**Revendications**

1. Procédé (50) de communication sans fil entre un réseau d'accès (30) et une pluralité de terminaux (20), ledit réseau d'accès étant adapté à émettre des messages descendants à destination des terminaux (20) et à recevoir des messages montants émis par lesdits terminaux, ledit réseau d'accès comportant une pluralité de stations de base (31) de type semi-duplex, **caractérisé en ce que,** lorsqu'un message descendant doit être émis, au cours d'un intervalle temporel prédéterminé, à destination d'un terminal (20) ayant émis un message montant reçu par plusieurs stations de base (31), ledit procédé comporte des étapes de :

   - (52) obtention, par le réseau d'accès (30), de grandeurs, dites « charges en réception », chacune étant associée respectivement à une des stations de base d'un groupe, lesdites stations de base (31) du groupe ayant reçu le message montant émis par ledit terminal (20), chaque charge en réception étant représentative d'une probabilité de réception, par la station de base considérée, d'un message montant au cours dudit intervalle temporel,
   - (53) sélection, par le réseau d'accès (30), d'une station de base parmi les stations de base du groupe, en fonction des charges en réception associées respectivement auxdites stations de base du groupe,
   - (54) émission du message descendant par la station de base sélectionnée parmi les stations de base du groupe.

2. Procédé (50) selon la revendication 1, dans lequel les charges en réception utilisées pour sélectionner la station de base sont déterminées en fonction de messages montants préalablement reçus par les stations de base (31).

3. Procédé (50) selon l'une des revendications 1 à 2, dans lequel la charge en réception d'une station de base (31) est représentative d'une probabilité de réception pondérée, pour chaque message montant susceptible d'être reçu par ladite station de base au cours dudit intervalle temporel, par la probabilité qu'a ce message montant d'être également reçu par une autre station de base (31) du réseau d'accès (30).

4. Procédé (50) selon l'une des revendications précédentes, comportant une étape (51) préalable d'établissement de calendriers de réception associés respectivement à différentes stations de base (31) du réseau d'accès (30), chaque calendrier de réception comportant des charges en réception associées respectivement à différents intervalles temporels sur une fenêtre temporelle prédéfinie.

5. Procédé (50) selon la revendication 4, dans lequel les charges en réception d'un calendrier de réception, sur une fenêtre temporelle constituée d'un nombre $N_{IT}$ d'intervalles temporels $\delta Ti$, $1 \leq i \leq N_{IT}$, sont représentatives d'une probabilité de réception pondérée, la charge en réception associée à l'intervalle temporel $\delta Ti$ pour une station de base de rang n du groupe comportant $N_S$ stations de base, $1 \leq n \leq N_S$, étant établie à partir d'une grandeur $W_n^{\delta Ti}$ calculée selon l'expression :

$$W_n^{\delta Ti} = \frac{\sum_{m=1}^{Ni} \frac{1}{BS_m}}{M}$$

expression dans laquelle :

   - M correspond au nombre de messages montants reçus sur une fenêtre temporelle précédente,
   - Ni correspond au nombre de messages montants reçus sur l'intervalle temporel $\delta Ti$ de la fenêtre temporelle précédente,
   - $BS_m$ correspond au nombre de stations de base ayant reçu, au cours de l'intervalle temporel $\delta Ti$ de la fenêtre temporelle précédente, le message montant de rang m, $1 \leq m \leq Ni$.

6. Procédé (50) selon l'une des revendications précédentes, dans lequel l'étape (53) de sélection comporte, pour chaque station de base (31) du groupe, le calcul de la valeur d'une fonction de sélection prédéfinie qui dépend de la charge en réception, la station de base sélectionnée étant celle qui optimise la valeur de ladite fonction de sélection sur le groupe de stations de base, ladite fonction de sélection variant avec ladite charge en réception de telle sorte que la valeur de la fonction de sélection tend à être optimisée lorsque la probabilité de réception d'un message montant au cours de l'intervalle temporel diminue.

7. Procédé (50) selon la revendication 6, dans lequel la fonction de sélection dépend en outre d'un paramètre représentatif de la superficie d'une zone de couverture de la station de base (31) considérée, et varie avec ledit paramètre de telle sorte que la valeur de la fonction de sélection tend à être optimisée lorsque ladite superficie de la zone de couverture diminue.

8. Procédé (50) selon l'une des revendications 6 à 7, dans lequel la fonction de sélection dépend en outre d'un paramètre représentatif du nombre de terminaux (20) couverts uniquement par la station de base (31) considérée, et varie avec ledit paramètre de telle sorte que la valeur de la fonction de sélection tend à être optimisée lorsque ledit nombre de terminaux (20) diminue.

9. Procédé (50) selon l'une des revendications 6 à 8, dans lequel la fonction de sélection dépend en outre d'un paramètre représentatif de la qualité d'un canal entre le terminal (20) et la station de base (31) considérée, et varie avec ledit paramètre de telle sorte que la valeur de la fonction de sélection tend à être optimisée lorsque ladite qualité de canal augmente.

10. Procédé (50) selon l'une des revendications 6 à 9, dans lequel la fonction de sélection dépend en outre d'un paramètre représentatif de la qualité d'une liaison entre la station de base (31) considérée et un serveur (32) du réseau d'accès (30), et varie avec ledit paramètre de telle sorte que la valeur de la fonction de sélection tend à être optimisée lorsque ladite qualité de liaison augmente.

11. Procédé (50) selon l'une des revendications 6 à 10, dans lequel la fonction de sélection dépend en outre d'un paramètre représentatif du nombre de messages descendants émis par la station de base (31) considérée depuis une durée d'analyse prédéfinie, et varie avec ledit paramètre de telle sorte que la valeur de la fonction de sélection tend à être optimisée lorsque ledit nombre de messages descendants diminue.

12. Réseau d'accès (30) comportant une pluralité de stations de base (31) de type semi-duplex adaptées à émettre des messages descendants à destination de terminaux (20), **caractérisé en ce qu'il** comporte des moyens configurés pour mettre en oeuvre les étapes d'un procédé de communication selon l'une des revendications précédentes.

13. Système (10) de communication sans fil **caractérisé en ce qu'**il comporte un réseau d'accès (30) selon la revendication 12, et une pluralité de terminaux (20).

**Patentansprüche**

1. Drahtloses Kommunikationsverfahren (50) zwischen einem Zugangsnetz (30) und einer Vielzahl von Endgeräten (20), wobei das Zugangsnetz dazu geeignet ist, Downlink-Nachrichten an Ziel der Endgeräte (20) zu senden, und Uplink-Nachrichten, die von den Endgeräten gesendet werden, zu empfangen, wobei das Zugangsnetz eine Vielzahl von Basisstationen (31) vom Halbduplex-Typ umfasst, **dadurch gekennzeichnet, dass** wenn eine Downlink-Nachricht im Laufe eines vorbestimmten Zeitintervalls an Ziel eines Endgeräts (20) gesendet werden muss, welches eine Uplink-Nachricht gesendet hat, die von mehreren Basisstationen (31) empfangen wird, das Verfahren Schritte umfasst des:

- (52) Erhaltens, durch das Zugangsnetz (30), von Größen, sogenannten "Empfangslasten", die jede jeweils einer der Basisstationen einer Gruppe zugeordnet sind, wobei die Basisstationen (31) der Gruppe die vom Endgerät (20) gesendete Uplink-Nachricht empfangen haben, wobei jede Empfangslast jeweils für eine Wahrscheinlichkeit des Empfangs, durch die betreffende Basisstation, einer Uplink-Nachricht im Laufe des Zeitintervalls repräsentativ ist,
- (53) Auswählens, durch das Zugangsnetz (30), einer Basisstation aus den Basisstationen der Gruppe in Abhängigkeit von den Empfangslasten, die jeweils den Basisstationen der Gruppe zugeordnet sind,
- (54) Sendens der Downlink-Nachricht durch die Basisstation, die aus den Basisstationen der Gruppe ausgewählt wurde.

2. Verfahren (50) nach Anspruch 1, wobei die Empfangslasten, die verwendet werden, um die Basisstation auszuwählen, in Abhängigkeit von Uplink-Nachrichten bestimmt werden, die vorher von den Basisstationen (31) empfangen wurden.

3. Verfahren (50) nach einem der Ansprüche 1 bis 2, wobei die Empfangslast einer Basisstation (31) für eine Empfangswahrscheinlichkeit repräsentativ ist, die für jede Uplink-Nachricht, welche von der Basisstation im Laufe des Zeitintervalls empfangen werden kann, mit der Wahrscheinlichkeit gewichtet wird, die diese Uplink-Nachricht aufweist, ebenfalls von einer anderen Basisstation (31) des Zugangsnetzes (30) empfangen zu werden.

4. Verfahren (50) nach einem der vorstehenden Ansprüche, das einen vorhergehenden Schritt (51) des Erstellens von Empfangszeitplänen umfasst, die jeweils verschiedenen Basisstationen (31) des Zugangsnetzes (30) zugeordnet sind, wobei jeder Empfangszeitplan Empfangslasten umfasst, die jeweils verschiedenen Zeitintervallen über ein vordefiniertes Zeitfenster zugeordnet sind.

**5.** Verfahren (50) nach Anspruch 4, wobei die Empfangslasten eines Empfangszeitplans über ein Zeitfenster, das aus einer Anzahl $N_{IT}$ von Zeitintervallen $\delta Ti$ besteht, $1 \leq i \leq N_{IT}$, für eine gewichtete Empfangswahrscheinlichkeit repräsentativ sind, wobei die Empfangslast, die dem Zeitintervall $\delta Ti$ zugeordnet ist, für eine Basisstation des Rangs n der Gruppe, die $N_S$ Basisstationen umfasst, $1 \leq n \leq N_s$, anhand einer Größe $W_n^{\delta Ti}$ erstellt wird, berechnet nach dem Ausdruck:

$$W_n^{\delta Ti} = \frac{\sum_{m=1}^{Ni} \frac{1}{BS_m}}{M}$$

Ausdruck, in dem:

- M der Anzahl von Uplink-Nachrichten entspricht, die über ein vorheriges Zeitfenster empfangen wurden,
- Ni der Anzahl von Uplink-Nachrichten entspricht, die über das Zeitintervall $\delta Ti$ des vorherigen Zeitfensters empfangen wurden,
- $BS_m$ der Anzahl von Basisstationen entspricht, die im Laufe des Zeitintervalls $\delta Ti$ des vorherigen Zeitfensters die Uplink-Nachricht von Rang m empfangen haben, $1 \leq m \leq Ni$.

**6.** Verfahren (50) nach einem der vorstehenden Ansprüche, wobei der Schritt (53) des Auswählens für jede Basisstation (31) der Gruppe das Berechnen des Wertes einer vordefinierten Auswahlfunktion umfasst, die von der Empfangslast abhängt, wobei die ausgewählte Basisstation diejenige ist, die den Wert der Auswahlfunktion über die Gruppe von Basisstationen optimiert, wobei die Auswahlfunktion derart mit der Empfangslast variiert, dass der Wert der Auswahlfunktion dazu tendiert, optimiert zu werden, wenn die Empfangswahrscheinlichkeit einer Uplink-Nachricht im Laufe des Zeitintervalls abnimmt.

**7.** Verfahren (50) nach Anspruch 6, wobei die Auswahlfunktion weiter von einem Parameter abhängt, der für die Fläche eines Deckungsbereichs der betreffenden Basisstation (31) repräsentativ ist, und derart mit dem Parameter variiert, dass der Wert der Auswahlfunktion dazu tendiert, optimiert zu werden, wenn die Fläche des Deckungsbereichs abnimmt.

**8.** Verfahren (50) nach einem der Ansprüche 6 bis 7, wobei die Auswahlfunktion weiter von einem Parameter abhängt, der für die Anzahl von Endgeräten (20) repräsentativ ist, die ausschließlich von der betreffenden Basisstation (31) abgedeckt werden, und derart mit dem Parameter variiert, dass der Wert der Auswahlfunktion dazu tendiert, optimiert zu werden, wenn die Anzahl von Endgeräten (20) abnimmt.

**9.** Verfahren (50) nach einem der Ansprüche 6 bis 8, wobei die Auswahlfunktion weiter von einem Parameter abhängt, der für die Qualität eines Kanals zwischen dem Endgerät (20) und der betreffenden Basisstation (31) repräsentativ ist, und derart mit dem Parameter variiert, dass der Wert der Auswahlfunktion dazu tendiert, optimiert zu werden, wenn die Kanalqualität zunimmt.

**10.** Verfahren (50) nach einem der Ansprüche 6 bis 9, wobei die Auswahlfunktion weiter von einem Parameter abhängt, der für die Qualität einer Verbindung zwischen der betreffenden Basisstation (31) und einem Server (32) des Zugangsnetzes (30) repräsentativ ist, und derart mit dem Parameter variiert, dass der Wert der Auswahlfunktion dazu tendiert, optimiert zu werden, wenn die Verbindungsqualität zunimmt.

**11.** Verfahren (50) nach einem der Ansprüche 6 bis 10, wobei die Auswahlfunktion weiter von einem Parameter abhängt, der für die Anzahl von Downlink-Nachrichten repräsentativ ist, die von der betreffenden Basisstation (31) seit einer vordefinierten Analysedauer gesendet wurden, und derart mit dem Parameter variiert, dass der Wert der Auswahlfunktion dazu tendiert, optimiert zu werden, wenn die Anzahl von Downlink-Nachrichten abnimmt.

**12.** Zugangsnetz (30), das eine Vielzahl von Basisstationen (31) vom Halbduplex-Typ umfasst, die dazu geeignet sind, Downlink-Nachrichten an Ziel von Endgeräten (20) zu senden, **dadurch gekennzeichnet, dass** es Mittel umfasst, die dafür konfiguriert sind, die Schritte eines Kommunikationsverfahrens nach einem der vorstehenden Ansprüche umzusetzen.

**13.** Drahtloses Kommunikationsnetz (10), **dadurch gekennzeichnet, dass** es ein Zugangsnetz (30) nach Anspruch 12, und eine Vielzahl von Endgeräten (20) umfasst.

**Claims**

**1.** A method (50) for wireless communication between an access network (30) and a plurality of terminals (20), said access network being suitable for transmitting downlink messages to the terminals (20) and for receiving uplink messages transmitted by said terminals, said access network including a plurality of half-duplex base stations (31), **characterized in that,** when a downlink message must be transmitted, within a predetermined time interval, to a terminal (20) having transmitted an uplink message received by multiple base stations (31), said method includes steps of:

- (52) obtainment, by the access network (30), of quantities referred to as "reception loads", each being associated with one of the base stations of a group respectively, said base stations (31) of the group having received the uplink message transmitted by said terminal (20), each reception load being representative of a probability of reception, by the base station under consideration, of an uplink message within said time interval;
- (53) selection, by the access network (30), of one base station from among the base stations of the group according to the reception loads that are associated with said respective base stations of the group;
- (54) transmission of the downlink message by the base station selected from among the base stations of the group.

2. The method (50) as claimed in claim 1, in which the reception loads used to select the base station are determined according to uplink messages that were previously received by the base stations (31).

3. The method (50) as claimed in one of claims 1 and 2, in which the reception load of a base station (31) is representative of a probability of reception that is weighted, for each uplink message that is likely to be received by said base station within said time interval, by the probability that this uplink message has also to be received by another base station (31) of the access network (30).

4. The method (50) as claimed in one of the preceding claims, including a prior step (51) of setting up reception schedules that are associated with different respective base stations (31) of the access network (30), each reception schedule including reception loads that are associated with different respective time intervals in a predefined time window.

5. The method (50) as claimed in claim 4, in which the reception loads of a reception schedule, in a time window consisting of a number $N_{IT}$ of time intervals $\delta Ti$, where $1 \leq i \leq N_{IT}$, are representative of a weighted probability of reception, the reception load associated with the time interval $\delta Ti$ for a base station of rank n of the group including Ns base stations, where $1 \leq n \leq Ns$, being set up on the basis of a quantity $W_n^{\delta Ti}$ calculated according to the expression:

$$W_n^{\delta Ti} = \frac{\sum_{m=1}^{Ni} \frac{1}{BS_m}}{M}$$

in which expression:

- M corresponds to the number of uplink messages received in a preceding time window;
- Ni corresponds to the number of uplink messages received in the time interval $\delta Ti$ of the preceding time window;
- $BS_m$ corresponds to the number of base stations having received, within the time interval $\delta Ti$ of the preceding time window, the uplink message of rank m, where $1 \leq m \leq Ni$.

6. The method (50) as claimed in one of the preceding claims, in which the selection step (53) includes, for each base station (31) of the group, the calculation of the value of a predefined selection function which depends on the reception load, the selected base station being that which optimizes the value of said selection function from among the group of base stations, said selection function varying with said reception load such that the value of the selection function tends to be optimized when the probability of reception of an uplink message within the time interval decreases.

7. The method (50) as claimed in claim 6, in which the selection function additionally depends on a parameter representative of the area of a coverage zone of the base station (31) under consideration, and varies with said parameter such that the value of the selection function tends to be optimized when said area of the coverage zone decreases.

8. The method (50) as claimed in one of claims 6 and 7, in which the selection function additionally depends on a parameter representative of the number of terminals (20) covered solely by the base station (31) under consideration, and varies with said parameter such that the value of the selection function tends to be optimized when said number of terminals (20) decreases.

9. The method (50) as claimed in one of claims 6 to 8, in which the selection function additionally depends on a parameter representative of the quality of a channel between the terminal (20) and the base station (31) under consideration, and varies with said parameter such that the value of the selection function tends to be optimized when said channel quality increases.

10. The method (50) as claimed in one of claims 6 to 9, in which the selection function additionally depends on a parameter representative of the quality of a link between the base station (31) under consideration and a server (32) of the access network (30), and varies with said parameter such that the value of the selection function tends to be optimized when said link quality increases.

11. The method (50) as claimed in one of claims 6 to 10, in which the selection function additionally depends on a parameter representative of the number of downlink messages transmitted by the base station (31) under consideration since a predefined duration of analysis, and varies with said parameter such that the value of the selection function tends to be optimized when said number of downlink messages decreases.

12. An access network (30) including a plurality of half-duplex base stations (31) that are suitable for transmitting downlink messages to terminals (20), **characterized in that** it includes means that are configured to implement the steps of a communication method as claimed in one of the preceding claims.

13. A wireless communication system (10) **characterized in that** it includes an access network (30) as claimed in claim 12, and a plurality of terminals (20).

Fig. 1

Groupe de stations
de base

50

| Obtention de charges en réception pour chaque station de base | 52 |

| Sélection d'une station de base | 53 |

| Emission par la station de base sélectionnée | 54 |

Fig. 2

50

Groupe de stations
de base

| Etablissement de calendriers de réception pour chaque station de base | | Obtention de charges en réception pour le groupe | 52 |

51

| Sélection d'une station de base | 53 |

| Emission par la station de base sélectionnée | 54 |

Fig. 3

**EP 3 259 934 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2002022487 A1
- WO 2015172041 A1